# EUROPEAN PATENT SPECIFICATION

(11) **EP 4 227 219 B1**
(45) Date of publication and mention of the grant of the patent: **11.06.2025**
(21) Application number: 23156870.0
(22) Date of filing: 15.02.2023
(51) Int. Cl.: B64D 11/00, B64D 11/06

(54) **USE OF FORWARD CLOSET IN SINGLE AISLE AIRCRAFT FOR WHEELCHAIR ACCOMMODATION**
VERWENDUNG EINES VORDEREN SCHRÄNKE IN EINGANG-FLUGZEUG ZUR UNTERBRINGUNG IN EINEM ROLLSTUHL
UTILISATION DE PLACARDS AVANT DANS UN AVION À ALLÉE UNIQUE POUR LA RÉCEPTION D'UN FAUTEUIL ROULANT

(30) Priority: 15.02.2022 US 202263310422 P; 10.02.2023 US 202318108151
(43) Date of publication of application: 16.08.2023
(73) Proprietor: B/E Aerospace, Inc., Winston-Salem, NC 27105 (US)
(72) Inventor: GUPTA, Ankit, Wichita, KS (US); GATTI, Carlos, Wichita, KS (US); GOMEZ, Luis, Andover, KS (US); JOHNSON, Glenn A., Rural Hall, NC (US); TUCKER, Ann, Belews Creek, NC (US)
(74) Representative: Dehns

(56) References cited:
- EP-A1- 3 608 227
- US-A1- 2012 048 998
- US-B1- 8 519 824
- US-B2- 8 047 467

## Description

### TECHNICAL FIELD AND BACKGROUND

The present disclosure relates generally to wheelchair accommodations for an aircraft, and more particularly, to use of a portion of a closet for accommodating an occupied wheelchair in a space-saving configuration that considers the needs and wants of wheelchair-dependent passengers as well as efficiencies in embarking and disembarking passengers.

Passengers with restricted mobility may require the use of a wheelchair. In some cases, a less severely restricted mobility passenger may be able to walk a short distance to embark and disembark an aircraft. In other cases, a severely restricted mobility passenger may be wheelchair-dependent requiring full-time use of a personal and specialized wheelchair.

Most aisle widths in aircraft are incapable of accommodating personal and specialized wheelchairs. As such, transfer chairs may be utilized supplied by the airline carrier or airport. Transfer chairs have a narrow width to be able to traverse a narrow aisle, and in some cases are used to transfer a passenger from their personal wheelchair outside the aircraft to a passenger seat on-board the aircraft. Wheelchair transfers can be time consuming, stressful, disruptive to the passenger, and increase risk of injury to the passenger. Further, a personal or specialized wheelchair must be stowed on-board the aircraft between uses of the wheelchair. Stowage solutions in the passenger cabin are limited and therefore require the wheelchair to fold. Having to fold, stow, retrieve, and ready a wheelchair for usage increases the time to disembark passengers and consequently the turnover time of the aircraft between flights. In addition, an aircraft passenger seat may be incapable of functioning comparatively to a personal or specialized wheelchair. Wheelchair accommodation in aircraft cabins is disclosed in US 8 519 824 B1 and US 2012/048998 A1.

Accordingly, what is needed is an on-board solution for accommodating wheelchair-dependent passengers that obviates the need for transfer chairs, passenger transfers, specialized passenger seats, etc.

### BRIEF SUMMARY

Accordingly, there is provided an aircraft passenger cabin as defined by claim 1.

In some embodiments, the second compartment is positioned between the first compartment and a wall adjacent the door, such as a fuselage wall of the aircraft, and the second compartment is accessible from the first branch aisle.

In some embodiments, the second compartment is positioned between the first compartment and the longitudinal aisle, and the second compartment is accessible from at least one of the first branch aisle and the longitudinal aisle.

In some embodiments, the closet includes a third compartment positioned directly above the second branch aisle, wherein the third compartment is accessible from at least one of the first compartment, the second branch aisle, and the longitudinal aisle, and wherein a bottom of the third compartment is substantially no lower than a height of the ceiling formed in the first compartment.

In some embodiments, the closet includes at least one of oxygen equipment and medical equipment located above the ceiling formed in the first compartment, the at least one of the oxygen equipment and the medical equipment configured for use by a passenger in the wheelchair accommodated in the first compartment.

In some embodiments, the closet includes a pallet positioned on the floor of the first compartment, the pallet including at least one device for attaching a strap to secure the wheelchair in place on the pallet.

In some embodiments, the pallet is configured to be secured to seat tracks in the floor and positioned at an angle to the longitudinal aisle.

In some embodiments, the first compartment is enterable through an opening without a door.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a portion of an aircraft passenger cabin including a closet configured to accommodate a wheelchair in an aft facing direction, in accordance with at least one embodiment of the present disclosure;
FIG. 2 illustrates a portion of an aircraft passenger cabin including a closet configured to accommodate a wheelchair in a forward facing direction, in accordance with at least one embodiment of the present disclosure;
FIG. 3 illustrates a closet configuration according to an embodiment of the present disclosure, showing a wheelchair secured in a compartment formed in the closet, in accordance with at least one embodiment of the present disclosure;
FIG. 4 illustrates a ceiling portion of the closet shown in FIG. 3, configured for locating oxygen equipment, medical equipment, other emergency equipment etc., in accordance with at least one embodiment of the present disclosure;
FIG. 5 illustrates compartment space formed by a closet configuration, in accordance with at least one embodiment of the present disclosure;
FIG. 6 illustrates a palletized wheelchair securement location in an aft facing direction, in accordance with at least one embodiment of the present disclosure;
FIG. 7 illustrates a palletized wheelchair securement location in a forward facing direction, in accordance with at least one embodiment of the present disclosure;
FIG. 8 illustrates a further palletized wheelchair securement location in a forward facing direction, in accordance with at least one embodiment of the present disclosure;
FIG. 9 illustrates a further palletized wheelchair securement location in an aft facing direction, in accordance with at least one embodiment of the present disclosure; and
FIG. 10 illustrates compartment volumes affording according to implementation of a closet configuration, in accordance with at least one embodiment of the present disclosure.

### DETAILED DESCRIPTION

Before explaining embodiments of the inventive concepts disclosed herein in detail, it is to be understood that the inventive concepts disclosed herein are not limited in their application to the details of construction and the arrangement of the components or steps or methodologies set forth in the following description or illustrated in the drawings. In the following detailed description of embodiments of the present disclosure, numerous specific details are set forth in order to provide a more thorough understanding of the inventive concepts. However, it will be apparent to one of ordinary skill in the art having the benefit of the present disclosure that the inventive concepts disclosed herein may be practiced without these specific details, while falling within the scope of the claims. In other instances, well-known features may not be described in detail to avoid unnecessarily complicating the present disclosure. The inventive concepts disclosed herein are capable of other embodiments or of being practiced or carried out in various ways within the scope of the claims.

As used herein, where applicable, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment.

Broadly, the present disclosure provides closet configurations for accommodating an unfolded wheelchair in a passenger cabin, for instance an aircraft passenger cabin. As used herein, the term "closet" refers to any enclosure, cabinet, monument or other furniture typically used for the purpose of stowing items in a passenger cabin, for instance an aircraft passenger cabin. Preferably, but not necessarily, a wheelchair according to the present disclosure means a passenger provided wheelchair and not an airport or airline carrier provided wheelchair configured for passenger transfer to and from a conventional passenger seat. In some embodiments, the wheelchair may be a standard sized or specialized wheelchair having a width or other dimension that makes the wheelchair incapable of traversing a conventional longitudinal aisle width. As used herein, the term "passenger of restricted mobility" is intended to mean any passenger that requires and/or benefits from the full-time or part-time use of a wheelchair. A wheelchair according to the present disclosure may be specialized in order to accommodate specific needs of the passenger.

Regarding implementation, a closet according to the present disclosure is preferably positioned proximate an exterior aircraft door for entering and exiting an aircraft. As used herein, aisle means any passageway in the cabin. The passenger cabin includes at least one longitudinal aisle arranged substantially parallel to an aircraft longitudinal aisle. Branch aisles extend from the longitudinal aisle. For example, a branch aisle may be arranged perpendicular to a longitudinal aisle providing a passageway between an exit door and a longitudinal aisle. A closet is positioned along a branch aisle and to one side of a branch aisle, such that the closet is directly accessible from the branch aisle upon entering into the aircraft.

The flight direction of the aircraft is indicated in the figures by the directional arrow 10 to provide meaning and context for forward and aft descriptions as used herein. For example, forward as used herein means generally facing the direction of flight, albeit in some embodiments angled and not necessary parallel to the aircraft longitudinal axis. As used herein, forward may also means a position closer to a front of the aircraft as compared to a referenced object. Vice versa, as used herein, aft means generally facing opposite the direction of flight, also in some embodiments at an angle to the aircraft longitudinal axis, as well as closer to a back of the aircraft as compared to a referenced object.

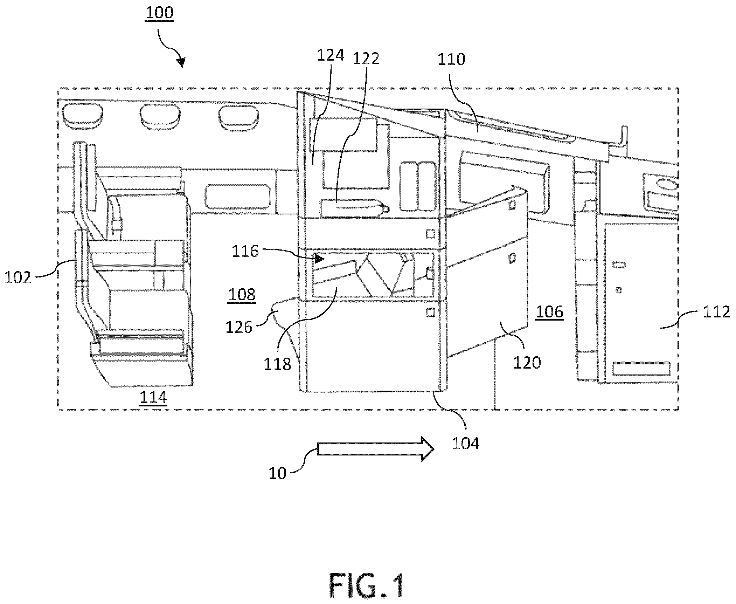

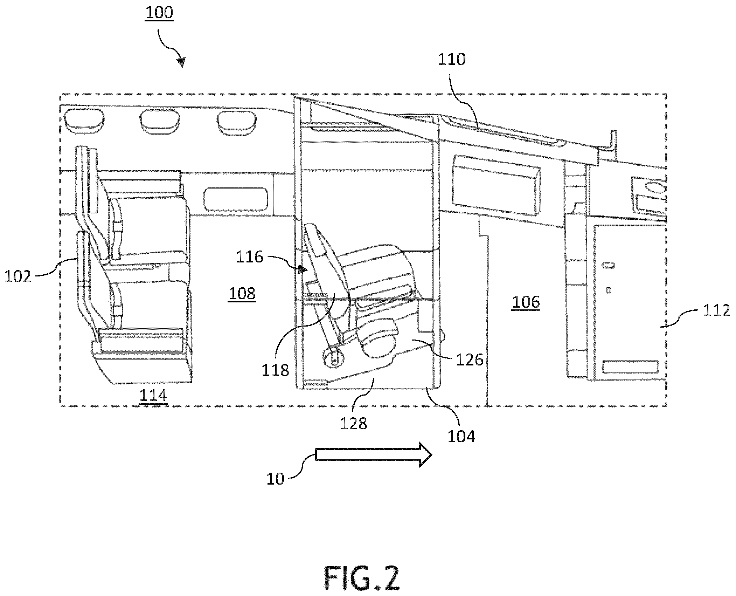

Referring to FIGS. 1 and 2, a non-limiting example of a portion of an aircraft cabin is shown generally at 100. The portion shown includes a seat row 102, a closet 104, a first branch aisle 106 positioned forward of the closet 104, and a second branch aisle 108 positioned between the first seat row 104 and the closet 104. In some embodiments, the first branch aisle 106 extends from an exterior door 110 for entering and exiting the aircraft, for instance during embarking and disembarking. In some embodiments, a lavatory 112 may be positioned to one side first branch aisle 106 and opposite the closet 104. The lavatory 112 may have a door that opens directly to the first branch aisle 106 such that a substantially straight passageway is provided between the first compartment of the closet 104 and the lavatory 112, as discussed further below. The lavatory 112 may include an aisle side door in addition to a branch aisle door, wherein the branch aisle door is dimensioned to allow passage of a wheelchair. In other embodiments, a galley may be positioned where the lavatory is shown or another closet 104.

The cabin layout 100 further includes at least one longitudinal aisle 114 arranged parallel to the aircraft longitudinal axis. In some embodiments, the longitudinal aisle 114 extends substantially the length of the aircraft. Each of the first and second branch aisles 106, 108 extend from the longitudinal aisle 114 to the fuselage wall. Upon entering the cabin through the exterior door 110, passengers with seat assignments traverse the first branch aisle 106 to reach the longitudinal aisle 114, and thereafter traverse the longitudinal aisle 114 to reach their assigned seat. The first branch aisle 106 has a width sufficient to accommodate a wheelchair and provides direct access into the first compartment formed in the closet 104, as discussed further below. The second branch aisle 108 may have a similar width as compared to the first branch aisle 106 in embodiments in which a wheelchair enters into the first compartment from the second branch aisle 108. The longitudinal aisle 114, at least the portion extending between the first branch aisle 106 and the second branch aisle 108 may have a width to allow passage of a wheelchair. In some embodiments, the first compartment formed in the closet 104 is enterable from the second branch aisle 108 and the seat row 102 facing the closet 104 is reserved for caretakers, family members or traveling companions of the person with restricted mobility, i.e., a relationship between the passenger(s) in the seat row and the passenger in the first compartment formed in the closet 104.

The closet 104 includes a first compartment 116 and at least one second compartment. The first compartment 116 is dimensioned to accommodate a wheelchair 118 in an unfolded condition and in some cases occupied by person with restricted mobility. Referring to FIG. 1, in some embodiments, a door 120 provides access into the first compartment 118 from the first branch aisle 106. Equipment 122, such as oxygen equipment, medical equipment, and other equipment may be located in the ceiling 124 directly above the first compartment. In some embodiments, the equipment 122 is intended for use by the person with restricted mobility as needed and/or in the event of an emergency situation. As shown, the wheelchair 118 is secured in place on a pallet 126 and is oriented facing the aft direction, generally facing the seat row 102, and angled relative to the longitudinal aisle 114. Referring to FIG. 2, the wheelchair 118 is also shown positioned in the first compartment 116 and secured in place on a pallet 126, but instead facing the forward direction and angled toward the exterior door 110. FIG. 2 further shows the first compartment 116 positioned behind an interior wall 128 adjacent the longitudinal aisle 114. The positioning of the wheelchair 118 in the forward or aft facing direction may be according to the preference of the passenger, positioning capability of the first compartment 116 and/or floor pallet 126, and location of a caretaker relative to the passenger.

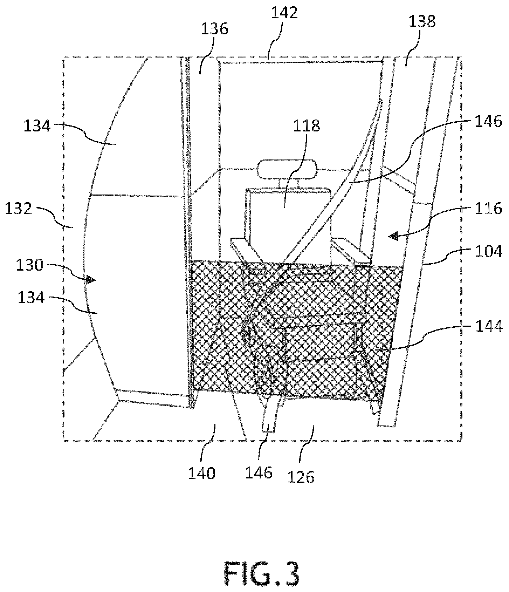

Referring to FIG. 3, the closet 104 generally includes the first compartment 116 and at least one second compartment 130 positioned adjacent to the first compartment 116. As shown, the at least one second compartment 130 may be positioned to one side of the first compartment 116, for instance between the first compartment 116 and the fuselage 132. The at least one second compartment 130 may include a lower compartment and an upper compartment each including a door 134 for accessing the interior space. The at least one second compartment 130 may or may not be reserved for use the passenger in the first compartment 116.

The first compartment 116 is formed between a first wall 136 and a second wall 138 and extends from the floor 140 to the ceiling 142. The pallet 126 is secured to the floor 140, such as to seat tracks embedded in the floor 140. The first compartment 116 may be open at one end, for instance the end proximate the first branch aisle or the end proximate of the second branch aisle. In some embodiments, both compartment ends may be open forming a passageway through the first compartment 116, such as a passageway between branch aisles. Cargo netting 144 or the like may be used, for example during taxi, takeoff and landing, to close the entrance to the compartment. Securement straps 146 may be used to secure the wheelchair 118 in place on the pallet 126. In some embodiments, the straps 146 anchor at one end to the closet 104 or to the pallet 126, and anchor at their opposing end to the other of the closet 104 or the pallet 126, or to the wheelchair 118 itself. As shown in FIG. 3, when implemented in an aircraft passenger cabin the closet 104 shape may correspond to the curvature of the fuselage.

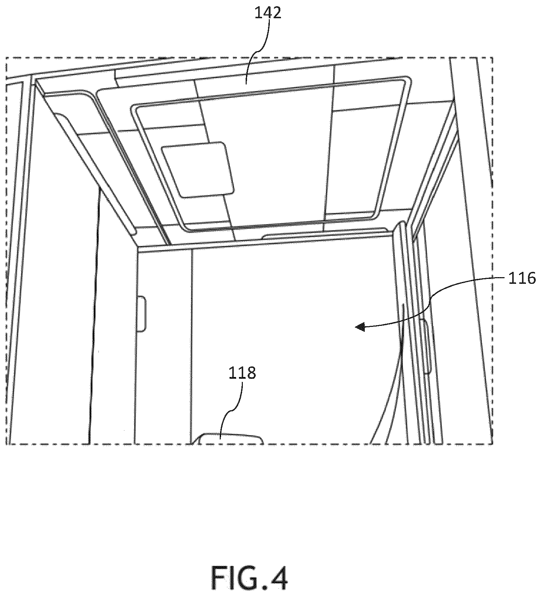

Referring to FIG. 4, the compartment ceiling 142 serves as the location for equipment, such as emergency oxygen equipment (see FIG. 1 at 122) for use by the passenger in the first compartment 116. Although not shown, additional amenities may be provided in the first compartment, such as a deployable tray table, media equipment, lighting, climatization, etc.

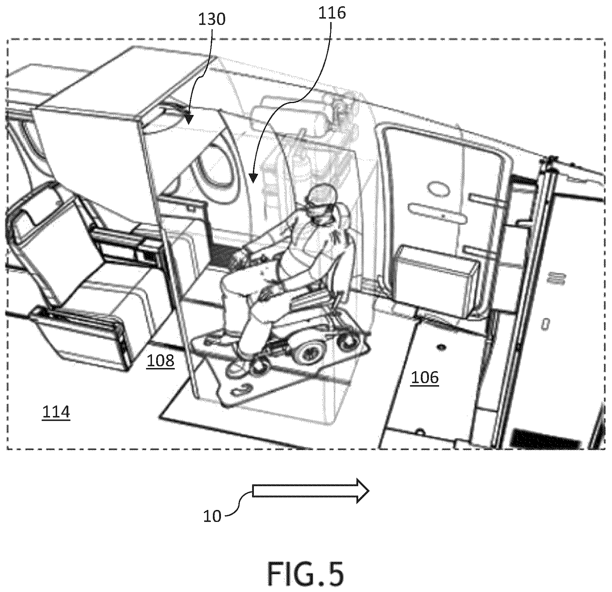

Referring to FIG. 5, another configuration for the closet 104 includes the first compartment 116 and the at least one second compartment 130 positioned to one end of the closet 104. As shown, the second compartment 130 is positioned at the aft end of the first compartment and elevated above the floor. More particularly, the second compartment 130 is positioned directly over the second branch aisle 108. The first compartment 116 may be enterable from one or both of the first branch aisle 106 and the second branch aisle 108. In this configuration, the first compartment 116 may extend substantially the length of the closet 104, i.e., from the fuselage wall to the interior wall adjacent the longitudinal aisle 114, and the second compartment 130 may also extend substantially from the fuselage wall to the longitudinal aisle 114. The second compartment 130 may or may not be reserved for use by the passenger in the first compartment 116. The second compartment 130 may be accessible from one or more of the first compartment 116, second branch aisle 108, and longitudinal aisle 114.

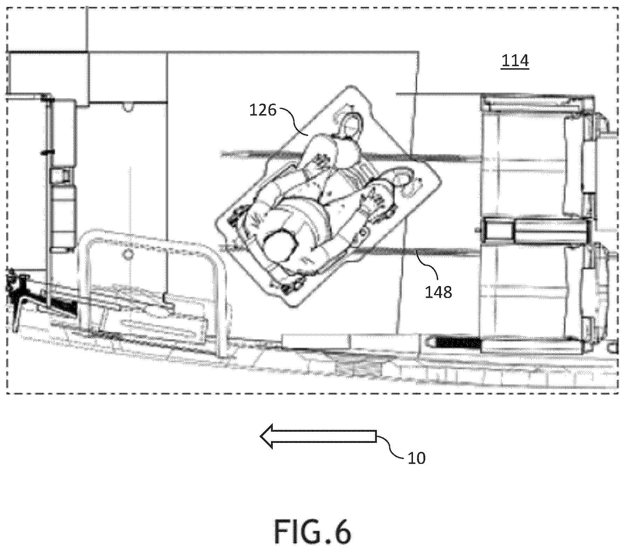

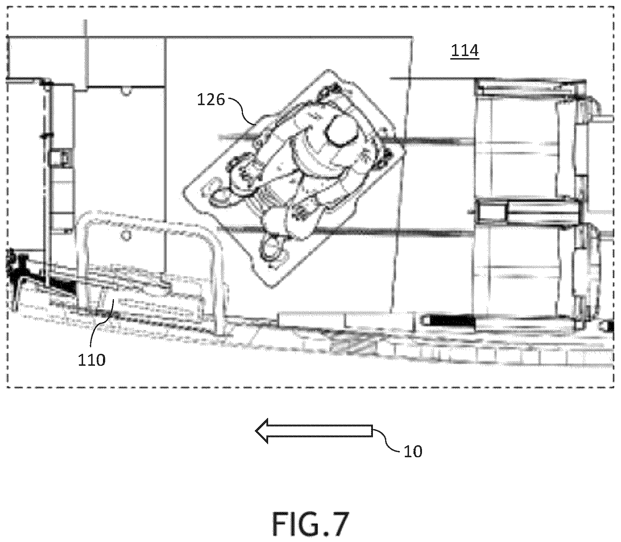

Referring to FIG. 6, wherein the closet is removed for clarity, a first pallet 126 orientation is shown generally aft facing and angled relative to the longitudinal aisle 114. The pallet 126 may be secured to seat tracks 148 embedded in the floor. In some embodiments, the pallet 126 may be positionally fixed. In other embodiments, the position of the pallet 126 may be adjustable based on passenger preference. Referring to FIG. 7, wherein the closet is removed for clarity, a second possible pallet 126 orientation is shown generally forward facing, angled away from the longitudinal aisle 114, and angled toward the exit door 110. The pallet 126 positions shown in FIGS. 6 and 7 may be better suited for use with the longitudinally shifted and elevated second compartment closet configuration shown in FIG. 5.

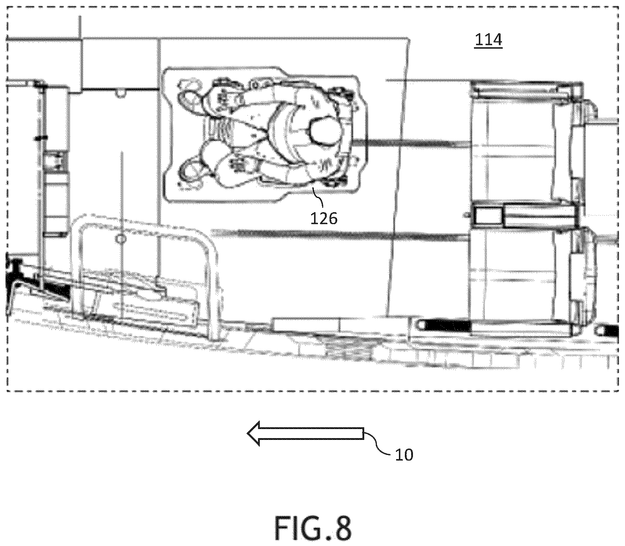

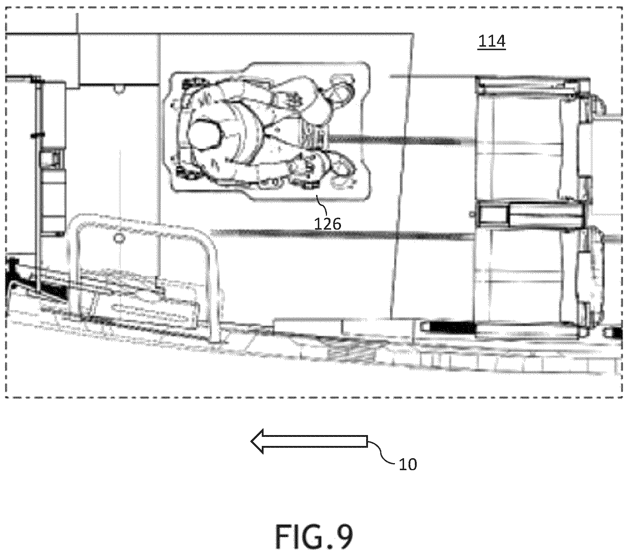

Referring to FIG. 8, wherein the closet is removed for clarity, the pallet 126 is positioned forward facing and parallel to the longitudinal aisle 114. Referring to FIG. 9, wherein the closet is removed for clarity, the pallet 126 is shown positioned aft facing and parallel to the longitudinal aisle 114. The pallet 126 positions shown in FIGS. 8 and 9 may be better suited for use with laterally positioned second compartments wherein a portion of the closet width is consumed by each of the first compartment and the at least one second compartment.

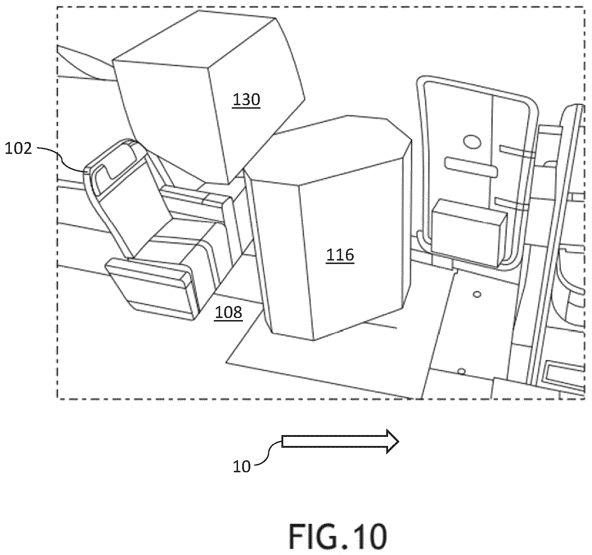

Referring to FIG. 10, the comparative volumes and positional relationship of the first compartment 116 and longitudinally-shifted second compartment 130 are shown. The storage volume lost by adding the first compartment 116 may be moved to the second compartment 130, such as a bustle, positioned adjacent and aft of the first compartment 116 and above the second branch aisle 108 and at least a portion of the seat row 102. In some embodiments, the second compartment 130 may include nearly 50% of the lost storage volume. Therefore, if a partition across the aisle incorporates a similar second compartment, then the storage volume may be 100% recovered. The embodiments according to the present disclosure are advantageous in that the closet may increase in space, e.g., length, and the lost storage volume can be made up by re-pitching the seats on the side of the aircraft where the closet is located.

Wheelchair attachment structure may include one or more straps configured to fasten the wheelchair to the pallet 126. The straps may include one or more locking or latching mechanisms configured to secure the wheelchair to the pallet 126. The attachment structure may be configured to rotate or swivel and enable a user of the wheelchair to face any direction (e.g., 360° of freedom), thereby potentially reducing motion sickness for a user of the wheelchair. The first compartment 116 is formed by the one or more walls which may include a window.

While the foregoing description provides embodiments of the invention by way of example only, it is envisioned that other embodiments are within the scope of the appended claims.

## Claims

1. An aircraft passenger cabin, comprising:
a longitudinal aisle (114);
a first branch aisle (106) extending from the longitudinal aisle;
a door (110) positioned at one end of the branch aisle opposite the longitudinal aisle;
a closet (104) positioned to one side of the first branch aisle, the closet comprising:
a first compartment (116) extending between a first wall and a second wall and from a floor to a ceiling formed in the first compartment, and the first compartment dimensioned to accommodate a wheelchair in an unfolded condition; and
a second compartment (130) positioned to one side of the first compartment,
at least one passenger seat (102) positioned on a side of the closet opposite the first branch aisle and facing the closet; and
a second branch aisle (108) positioned between the at least one passenger seat and the closet, the second branch aisle extending from the longitudinal aisle;
wherein each of the first branch aisle and the second branch aisle is dimensioned to accommodate the wheelchair and provide direct access into the first compartment from the respective branch aisle.

2. The aircraft passenger cabin according to claim 1, wherein:
the second compartment is positioned between the first compartment and a wall adjacent the door; and
the second compartment is accessible from the first branch aisle.

3. The aircraft passenger cabin according to claim 1, wherein:
the second compartment is positioned between the first compartment and the longitudinal aisle; and
the second compartment is accessible from at least one of the first branch aisle and the longitudinal aisle.

4. The aircraft passenger cabin according to claim 1, wherein:
the closet further comprises a third compartment positioned directly above the second branch aisle;
the third compartment is accessible from at least one of the first compartment, the second branch aisle, and the longitudinal aisle; and
a bottom of the third compartment is no lower than a height of the ceiling formed in the first compartment.

5. The aircraft passenger cabin according to any preceding claim, further comprising at least one of oxygen equipment (122) and medical equipment located above the ceiling formed in the first compartment, the at least one of the oxygen equipment and the medical equipment configured for use by a passenger in the wheelchair accommodated in the first compartment.

6. The aircraft passenger cabin according to any preceding claim, further comprising a pallet (126) positioned on the floor (140) of the first compartment, the pallet including at least one device for attaching a strap (146) to secure the wheelchair in place on the pallet.

7. The aircraft passenger cabin according to claim 6, wherein the pallet is configured to be secured to seat tracks (148) in the floor and positioned at an angle to the longitudinal aisle.

8. The aircraft passenger cabin according to any preceding claim, wherein the first compartment is enterable through an opening without a door.

## Patentansprüche

1. Flugzeugpassagierkabine, umfassend:
einen Längsgang (114);
einen ersten Seitengang (106), der sich von dem Längsgang erstreckt;
eine Tür (110), die an einem Ende des Seitengangs gegenüber dem Längsgang positioniert ist;
einen Schrank (104), der auf einer Seite des ersten Seitengangs positioniert ist, wobei der Schrank Folgendes umfasst:
ein erstes Abteil (116), das sich zwischen einer ersten Wand und einer zweiten Wand und von einem Boden bis zu einer Decke, die in dem ersten Abteil ausgebildet sind, erstreckt, wobei das erste Abteil so bemessen ist, dass es einen Rollstuhl in einem aufgeklappten Zustand unterbringen kann; und
ein zweites Abteil (130), das auf einer Seite des ersten Abteils positioniert ist,
mindestens einen Passagiersitz (102), der auf einer Seite des Schranks gegenüber dem ersten Seitengang positioniert und dem Schrank zugewandt positioniert ist; und
einen zweiten Seitengang (108), der zwischen dem mindestens einen Passagiersitz und dem Schrank positioniert ist, wobei sich der zweite Seitengang von dem Längsgang erstreckt;
wobei der erste Seitengang und der zweite Seitengang jeweils so bemessen sind, dass sie den Rollstuhl unterbringen können und einen direkten Zugang von dem jeweiligen Seitengang in das erste Abteil bereitstellen.

2. Flugzeugpassagierkabine nach Anspruch 1, wobei:
das zweite Abteil zwischen dem ersten Abteil und einer Wand benachbart zu der Tür positioniert ist; und
das zweite Abteil von dem ersten Seitengang aus zugänglich ist.

3. Flugzeugpassagierkabine nach Anspruch 1, wobei:
das zweite Abteil zwischen dem ersten Abteil und dem Längsgang positioniert ist; und
das zweite Abteil von mindestens einem von dem ersten Seitengang und dem Längsgang aus zugänglich ist.

4. Flugzeugpassagierkabine nach Anspruch 1, wobei:
der Schrank ferner ein drittes Abteil umfasst, das direkt über dem zweiten Seitengang positioniert ist;
das dritte Abteil von mindestens einem von dem ersten Abteil, dem zweiten Seitengang und dem Längsgang aus zugänglich ist; und ein Boden des dritten Abteils nicht niedriger als eine Höhe der in dem ersten Abteil ausgebildeten Decke ist.

5. Flugzeugpassagierkabine nach einem der vorhergehenden Ansprüche, ferner umfassend mindestens eines von Sauerstoffausrüstung (122) und medizinischer Ausrüstung, die sich über der in dem ersten Abteil ausgebildeten Decke befinden, wobei das mindestens eine von der Sauerstoffausrüstung und der medizinischen Ausrüstung zur Verwendung durch einen Passagier in dem Rollstuhl, der in dem ersten Abteil untergebracht ist, konfiguriert ist.

6. Flugzeugpassagierkabine nach einem der vorhergehenden Ansprüche, ferner umfassend eine Palette (126), die auf dem Boden (140) des ersten Abteils positioniert ist, wobei die Palette mindestens eine Vorrichtung zum Anbringen eines Riemens (146) beinhaltet, um den Rollstuhl an Ort und Stelle auf der Palette zu sichern.

7. Flugzeugpassagierkabine nach Anspruch 6, wobei die Palette dazu konfiguriert ist, an Sitzschienen (148) in dem Boden gesichert und in einem Winkel zu dem Längsgang positioniert zu sein.

8. Flugzeugpassagierkabine nach einem der vorhergehenden Ansprüche, wobei das erste Abteil durch eine Öffnung ohne eine Tür betretbar ist.

## Revendications

1. Cabine de passagers d'aéronef, comprenant :
un couloir longitudinal (114) ;
un premier couloir secondaire (106) se prolongeant à partir du couloir longitudinal ;
une porte (110) positionnée à une extrémité du couloir secondaire opposé au couloir longitudinal ;
un placard (104) positionné d'un côté du premier couloir secondaire, le placard comprenant :
un premier compartiment (116) se prolongeant entre une première paroi et une seconde paroi et d'un plancher à un plafond formé dans le premier compartiment, et le premier compartiment étant dimensionné pour accueillir un fauteuil roulant dans un état déplié ; et
un second compartiment (130) positionné d'un côté du premier compartiment,
au moins un siège passager (102) positionné sur un côté du placard opposé au premier couloir secondaire et faisant face au placard ; et
un second couloir secondaire (108) positionné entre l'au moins un passager et le placard, le second couloir secondaire se prolongeant à partir du couloir longitudinal ;
dans lequel chacun du premier couloir secondaire et du second couloir secondaire est dimensionnée pour accueillir le fauteuil roulant et fournir un accès direct au premier compartiment à partir du couloir secondaire respectif.

2. Cabine passager d'aéronef selon la revendication 1, dans lequel :
le second compartiment est placé entre le premier compartiment et un mur adjacent à la porte ; et
le second compartiment est accessible depuis le premier couloir secondaire.

3. Cabine passager d'aéronef selon la revendication 1, dans lequel :
le second compartiment est positionné entre le premier compartiment et le couloir longitudinal ; et
le second compartiment est accessible depuis au moins l'un du premier couloir secondaire et du couloir longitudinal.

4. Cabine passager d'aéronef selon la revendication 1, dans laquelle :
le placard comprend également un troisième compartiment positionné directement au-dessus du second couloir secondaire ; le troisième compartiment est accessible depuis au moins l'un du premier compartiment, du second et du troisième couloir secondaire et du couloir longitudinal ; et
le fond du troisième compartiment n'est pas inférieur à la hauteur du plafond formé dans le premier compartiment.

5. Cabine de passagers d'aéronef selon une quelconque revendication précédente, comprenant également au moins l'un de l'équipement d'oxygène (122) et de l'équipement médical situé au-dessus du plafond formé dans le premier compartiment, l'au moins un de l'équipement d'oxygène et de l'équipement médical configuré pour être utilisé par un passager dans le fauteuil roulant logé dans le premier compartiment.

6. Cabine passagers d'aéronef selon une quelconque revendication précédente, comprenant également une palette (126) positionnée sur le plancher (140) du premier compartiment, la palette comportant au moins un dispositif de fixation d'une sangle (146) pour fixer le fauteuil roulant en place sur la palette.

7. Cabine de passagers d'aéronef selon la revendication 6, dans laquelle la palette est configurée pour être fixée à des rails de siège (148) dans le plancher et positionnée à un angle par rapport à le couloir longitudinal.

8. Cabine de passagers d'aéronef selon une quelconque revendication précédente, dans laquelle le premier compartiment est accessible par une ouverture sans porte.
